# EUROPEAN PATENT APPLICATION

(11) **EP 4 749 420 A1**
(43) Date of publication of application: **27.05.2026**
(21) Application number: 25212057.1
(22) Date of filing: 29.10.2025
(51) Int. Cl.: G06F 3/0484, G06F 3/038, G06F 3/0338, G06F 3/0346, G06F 3/0354, A63F 13/21, A63F 13/211, A63F 13/428, A63F 13/24

(54) **COMPUTER IMPLEMENTED METHOD, INFORMATION PROCESSING SYSTEM, AND INFORMATION PROCESSING PROGRAM**

(30) Priority: 26.11.2024 JP 2024205074
(71) Applicant: Nintendo Co., Ltd., Kyoto 601-8501 (JP)
(72) Inventor: TANAKA, Wataru, Kyoto, 601-8501 (JP)
(74) Representative: Bardehle Pagenberg Partnerschaft mbB Patentanwälte Rechtsanwälte

(57) **Abstract**

In a first mode, a virtual object is controlled based on an output of a mouse sensor (24, 44). In a second mode, a virtual object is controlled based on an output of an inertial sensor (83, 84, 96, 97). In a third mode, a virtual object is controlled based on an output of a directional operation portion (22, 42). When the mode is the first mode, the mode is shifted to the second mode, based on at least a first condition being satisfied, and the mode is shifted to the third mode, based on at least a second condition being satisfied.

## Description

### CROSS REFERENCE TO RELATED APPLICATION

This application claims priority to Japanese Patent Application No. 2024-205074 filed on November 26, 2024, the entire contents of which are incorporated herein by reference.

### FIELD

The present disclosure relates to information processing.

### BACKGROUND AND SUMMARY

Conventionally, a technology of switching between operating an aim sight position based on an operation on an operation portion and operating the aim sight position based on acquired coordinates, has been known. In addition, it is known that, for example, an acceleration sensor may be used for acquiring coordinates to be used for operating the aim sight position. In addition, it is known that, in switching of the operation, the acquired coordinates, movement of a controller, and an operation state of the operation portion may be taken into consideration.

In such a technology as described above, a case where there is another input means different from the above input means and used for operation of the aim sight position is not considered.

Configuration examples will be shown below.

### (Configuration 1)

A configuration 1 is a computer-implemented method comprising: setting one of a plurality of modes including a first mode, a second mode, and a third mode; in the first mode, controlling a virtual object, based on an output of a mouse sensor included in at least one controller of one or a plurality of controllers; in the second mode, controlling the virtual object, based on an output of an inertial sensor included in at least one controller of the one or plurality of controllers; in the third mode, controlling the virtual object, based on an output of a user-operable directional operation portion included in at least one controller of the one or plurality of controllers; and when the mode is the first mode, shifting the mode to the second mode, based on at least a first condition being satisfied, and shifting the mode to the third mode, based on at least a second condition being satisfied.

### (Configuration 2)

In a configuration 2 based on the above configuration 1, the computer-implemented method may further comprise, when the mode is the second mode, shifting the mode to the third mode, based on the second condition being satisfied, and shifting the mode to the first mode, based on at least a third condition being satisfied.

### (Configuration 3)

In a configuration 3 based on the above configuration 1 or 2, the computer-implemented method may further comprise, when the mode is the third mode, shifting the mode to the second mode, based on at least the first condition being satisfied, and shifting the mode to the first mode, based on at least a fourth condition being satisfied.

### (Configuration 4)

In a configuration 4 based on the above configuration 3, the third condition and the fourth condition may each include a condition regarding an output of the mouse sensor, and a period required for the computer-implemented method to make determination for the third condition may be longer than a period required for the computer-implemented method to make determination for the fourth condition.

### (Configuration 5)

In a configuration 5 based on any one of the above configurations 1 to 4, the first condition may include a condition regarding an output of the inertial sensor, and the computer-implemented method may further comprise, when the mode is the first mode, if an output of the mouse sensor does not indicate movement of the at least one controller including the mouse sensor, shifting the mode to the second mode when at least the first condition is satisfied, and if an output of the mouse sensor indicates movement of the controller, not shifting the mode to the second mode even when the first condition is satisfied.

### (Configuration 6)

In a configuration 6 based on any one of the above configurations 1 to 5, the computer-implemented method may further comprise setting the second mode, when an output of the mouse sensor does not indicate movement of the at least one controller including the mouse sensor, an output of the inertial sensor does not indicate movement of the controller, and the directional operation portion is not being operated.

### (Configuration 7)

In a configuration 7 based on any one of the above configurations 1 to 6, the computer-implemented method may further comprise, based on an output of the controller that includes the directional operation portion and one of the mouse sensor or the inertial sensor and does not include the other one, shifting the mode between the third mode and one of the first mode or the second mode and not shifting the mode between the third mode and the other one of the first mode or the second mode.

### (Configuration 8)

In a configuration 8 based on any one of the above configurations 1 to 7, the computer-implemented method may further comprise causing the computer to execute game processing, and the virtual object may be a pointer to be used in the game processing.

According to the exemplary embodiment, it is possible to provide a novel operation for a virtual object, for example.

### BRIEF DESCRIPTION OF THE DRAWINGS

FIG. 1 shows a non-limiting example of a state in which a right controller 3 and a left controller 4 are attached to a main body apparatus 2;
FIG. 2 is six orthogonal views showing a non-limiting example of the right controller 3;
FIG. 3 is six orthogonal views showing a non-limiting example of the left controller 4;
FIG. 4 is a block diagram showing a non-limiting example of the internal configuration of the main body apparatus 2;
FIG. 5 is a block diagram showing a non-limiting example of the internal configurations of the main body apparatus 2, the right controller 3, and the left controller 4;
FIG. 6 shows a non-limiting example of a state in which the right controller 3 is operated by being held by a right hand;
FIG. 7 shows a non-limiting example of a state in which the right controller 3 is operated by being held by a right hand;
FIG. 8 illustrates a non-limiting example of shift of an operation mode of a controller;
FIG. 9 shows a non-limiting example of various data stored in a DRAM 69;
FIG. 10 shows a non-limiting example of a flowchart of information processing;
FIG. 11 shows a non-limiting example of a flowchart of information processing;
FIG. 12 shows a non-limiting example of a flowchart of information processing;
FIG. 13 shows a non-limiting example of a flowchart of information processing;
FIG. 14 shows a non-limiting example in which an aim sight is displayed on a screen;
FIG. 15 shows a non-limiting example in which an aim sight is displayed on a screen; and
FIG. 16 shows a non-limiting example in which an aim sight is displayed on a screen.

### DETAILED DESCRIPTION OF NON-LIMITING EXAMPLE EMBODIMENTS

Hereinafter, an exemplary embodiment will be described.

### [Example of hardware configuration of information processing system]

Hereinafter, a game system which is an example of an information processing system of the exemplary embodiment will be described. An example of a game system 1 according to the exemplary embodiment includes an information processing apparatus (sometimes referred to as "main body apparatus") 2, a right controller 3, and a left controller 4. The main body apparatus 2 according to the exemplary embodiment allows the right controller 3 and the left controller 4 to be attached thereto and detached therefrom.

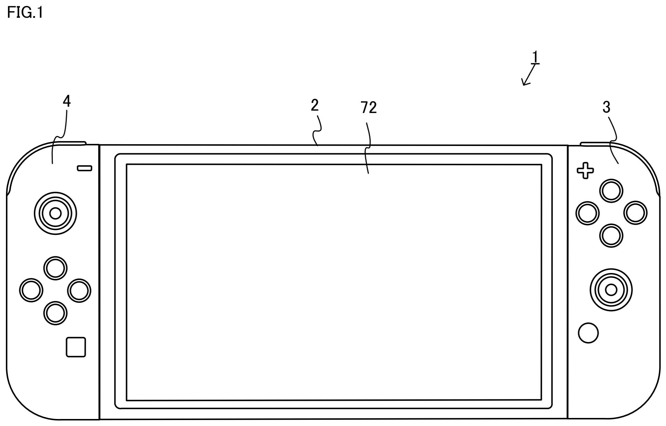

FIG. 1 is a diagram showing an example of a state where the right controller 3 and the left controller 4 are attached to the main body apparatus 2. As shown in FIG. 1, the right controller 3 and the left controller 4 are attached to and integrated with the main body apparatus 2. The main body apparatus 2 is an apparatus for executing various kinds of processing (e.g., game processing) in the game system 1. The main body apparatus 2 includes a display 72. The right controller 3 and the left controller 4 are each an input device including operation portions and the like on which a user performs input. Hereinafter, the right controller 3 and the left controller 4 are sometimes collectively referred to as "controller".

The display 72 displays images generated by the main body apparatus 2. The display 72 is, for example, a liquid crystal display device (LCD). A touch panel is provided on the screen of the display 72. The touch panel is, for example, a type capable of receiving a multi-touch input (e.g., electrical capacitance type).

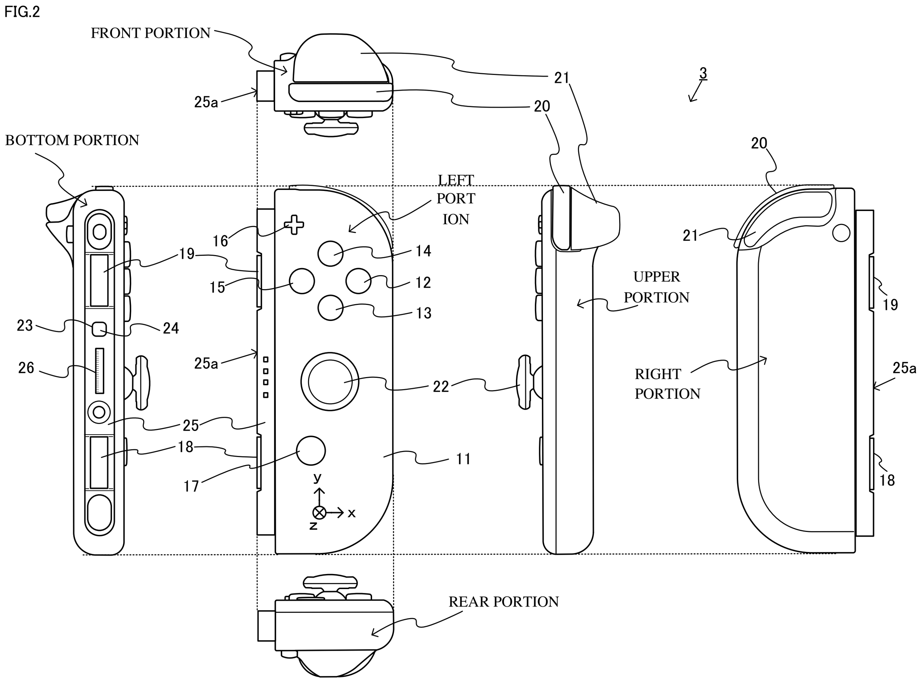

FIG. 2 is six orthogonal views schematically showing an example of the right controller 3. As shown in FIG. 2, the right controller 3 has a vertically long plate shape, has a housing 11, and has a front portion, a rear portion, an upper portion, a bottom portion, a right portion, and a left portion. In the right controller 3, the rear portion is located on a side opposite to the front portion, the bottom portion is located on a side opposite to the upper portion, and the left portion is located on a side opposite to the right portion. The distance between the front portion and the rear portion is larger than the distance between the upper portion and the bottom portion. The distance between the upper portion and the bottom portion is larger than the distance between the right portion and the left portion. In another exemplary embodiment, these distances may have another magnitude relationship. In the exemplary embodiment, a direction connecting the bottom portion and the upper portion may be referred to as an up-down direction, a direction perpendicular to the up-down direction and connecting the front portion and the rear portion may be referred to as a front-rear direction, and a direction perpendicular to the up-down direction and the front-rear direction and connecting the right portion and the left portion may be referred to as a left-right direction. In FIG. 2, x, y, and z axes are shown on a front view in which the left portion faces the near side, and represent a coordinate system of the right controller 3 (which may be referred to as a "right controller coordinate system"). In this coordinate system, a direction heading toward the right portion from the left portion is a z-axis plus direction. A direction perpendicular to the z axis and heading toward the upper portion from the bottom portion is an x-axis plus direction. A direction perpendicular to the z axis and the x axis and heading toward the front portion from the rear portion is a y-axis plus direction. When the bottom portion is directed in the gravity direction, an x-axis minus direction and the gravity direction coincide with each other. In the description relevant to the right controller 3, the x axis, the y axis, and the z axis are the x axis, the y axis, and the z axis in the right controller coordinate system, unless otherwise specified. In the exemplary embodiment, portions such as the front portion and the bottom portion need not be perfectly flat, and may have a recess, a projection, and/or a slope. For example, the bottom portion includes a protruding portion 25 described later. A direction in which each portion faces and a direction connecting the portions are shown as approximate directions.

The right controller 3 has the protruding portion 25 which is fitted into a recessed portion (not shown) of the main body apparatus 2 in a state where the right controller 3 is attached to the main body apparatus 2. As shown in FIG. 2, the protruding portion 25 has a protruding shape protruding in the x-axis minus direction and having a left-right width shorter than that of the right controller 3 and a front-rear width shorter than that of the right controller 3. In the exemplary embodiment, the protruding portion 25 is a part of the bottom portion.

As described later, the right controller 3 can be held in an orientation in which the right controller 3 is vertically long, in a state of being detached from the main body apparatus 2. The right controller 3 has such a shape and a size that the right controller 3 can be held by one hand, in particular, a right hand, in a case of being held in the orientation in which the right controller 3 is vertically long. The right controller 3 can also be held in an orientation in which the right controller 3 is horizontally long, and may be held by both hands in a case of being held in the orientation in which the right controller 3 is horizontally long (not shown).

The right controller 3 has, at the left portion, an analog stick (sometimes simply referred to as a "stick") 22 which is an example of a directional input portion. The stick 22 can be used as a directional input portion via which an operation of inputting a direction can be performed. The stick may be referred to as a directional operation portion. The user can perform directional input corresponding to a tilt direction by tilting the stick 22 in a desired direction, and can perform input with a magnitude corresponding to the tilt angle. In addition, the user can perform button input by pushing the stick 22 in. The directional input portion may, for example, be a directional pad or a slide pad. The direction input portion may be referred to as a directional operation portion.

The right controller 3 has, at the left portion, a set of four buttons which are an A button 12, a B button 13, an X button 14, and a Y button 15, a + (plus) button 16, and a home button 17. The right controller 3 has an R button 20 and a ZR button 21 over a range from the front portion to the upper portion. The R button 20 and the ZR button 21 may be provided at only the front portion of the right controller 3, or may be provided only at the upper portion of the right controller 3. The right controller 3 has a button 18 and a button 19 at a top surface 25a of the protruding portion 25.

The right controller 3 has an opening 23 for a mouse sensor, at the top surface 25a of the protruding portion 25. The opening 23 for a mouse sensor is an opening of a light guide path for guiding light to a mouse sensor 24 provided inside the right controller 3. The mouse sensor 24 is an optical mouse sensor and may include a light emitting portion and a light receiving portion. Light to be detected by the light receiving portion may be visible light or light having an invisible wavelength. The mouse sensor 24 includes at least a light receiving portion and may not necessarily include a light emitting portion. The mouse sensor 24 acquires data that enables calculation of movement or the like, on a placement surface, of the right controller 3 placed such that the top surface 25a of the protruding portion 25 of the bottom portion faces the placement surface. Thus, the right controller 3 can be used also as a mouse. An operation of using as a mouse may be referred to as a "mouse operation". The placement surface is not limited to a flat surface, and may be a curved surface or the like, e.g., a surface of a thigh of a user.

**In** the exemplary embodiment, the right controller 3 has, at the protruding portion 25, a terminal 26 for the right controller 3 to perform wired communication with the main body apparatus 2. The terminal 26 is provided on the inner peripheral surface of a recess formed in the top surface 25a of the protruding portion 25, for example.

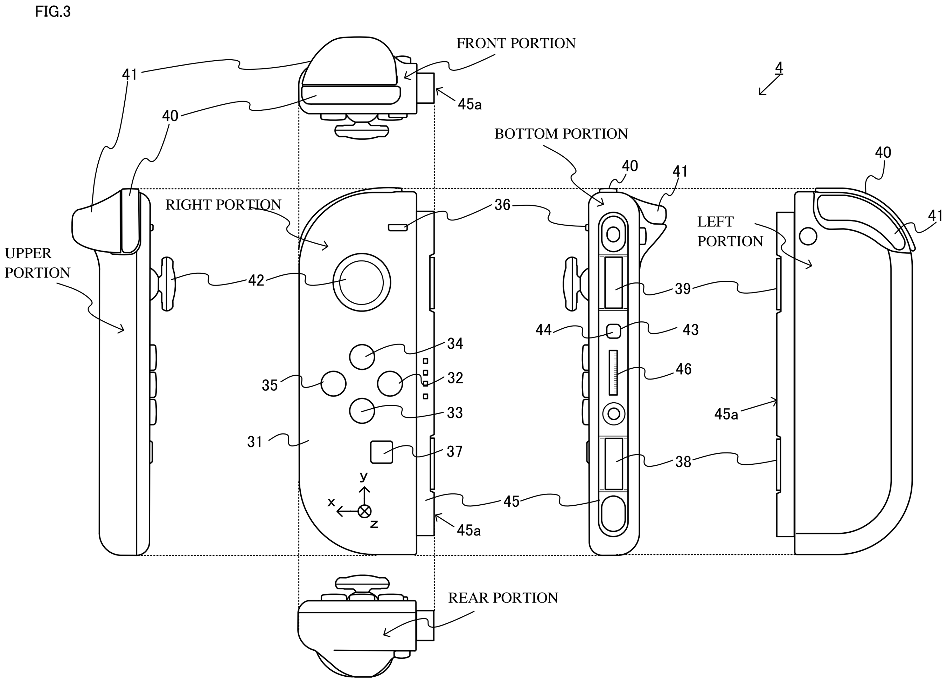

FIG. 3 is six orthogonal views schematically showing an example of the left controller 4. The description of similar configurations as those of the right controller 3 is omitted. The left controller 4 has, at a right portion, a stick 42, a set of four buttons which are a right direction button 32, an up direction button 33, a down direction button 34, and a left direction button 35, a capture button 37, and a - (minus) button 36. The buttons 32 to 35 may be one directional pad. In the right controller 3, the stick 22 is located rearward of the buttons 12 to 15, whereas in the left controller 4, the stick 42 is located frontward of the buttons 32 to 35. In FIG. 3, x, y, and z axes are shown on a front view in which the right portion faces the near side, and represent a coordinate system of the left controller 4 (which may be referred to as a "left controller coordinate system"). In this coordinate system, a direction heading toward the left portion from the right portion is a z-axis plus direction. A direction perpendicular to the z axis and heading toward the upper portion from the bottom portion is an x-axis plus direction. A direction perpendicular to the z axis and the x axis and heading toward the front portion from the rear portion is a y-axis plus direction. When the bottom portion is directed in the gravity direction, an x-axis minus direction and the gravity direction coincide with each other. In the description relevant to the left controller 4, the x axis, the y axis, and the z axis are the x axis, the y axis, and the z axis in the left controller coordinate system, unless otherwise specified.

The left controller 4 has a protruding portion 45 which is fitted into a recessed portion (not shown) of the main body apparatus 2 in a state where the left controller 4 is attached to the main body apparatus 2. As with the right controller 3, the protruding portion 45 includes buttons 38 and 39, an opening 43 for a mouse sensor, a mouse sensor 44, and a terminal 46.

As with the right controller 3, the left controller 4 can be held in an orientation in which the left controller 4 is vertically long or horizontally long, in a state of being detached from the main body apparatus 2.

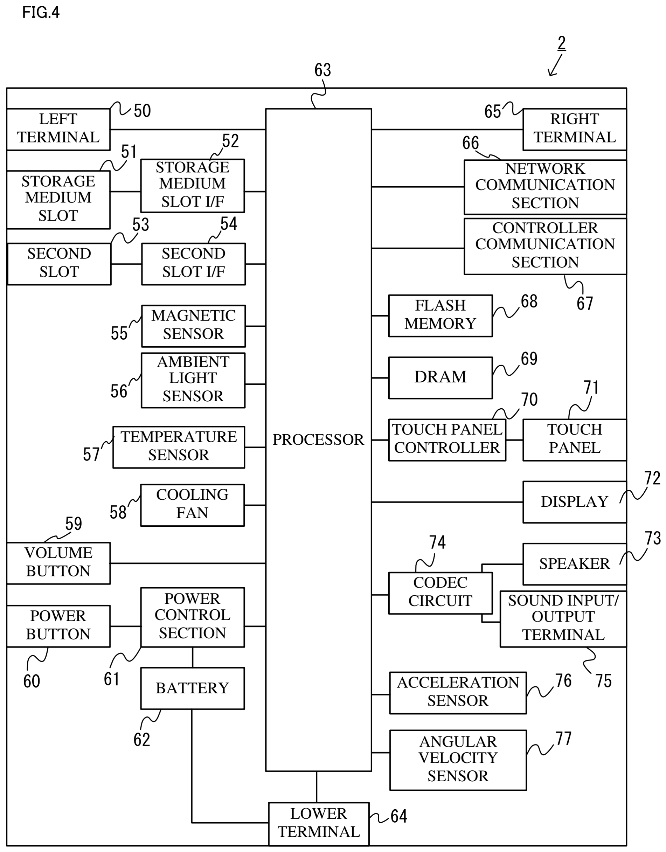

FIG. 4 is a block diagram showing an example of the internal configuration of the main body apparatus 2. The main body apparatus 2 includes a processor 63. The processor 63 is an information processing unit which executes various kinds of information processing to be executed in the main body apparatus 2. The processor 63 may be composed of, for example, a plurality of processors and cores, or typically, a plurality of CPUs (Central Processing Units) and cores, or may be formed by a SoC (System-on-a-chip) including a plurality of functions such as a CPU function and a GPU (Graphics Processing Unit) function. The processor 63 executes various kinds of information processing by executing an information processing program (e.g., a game program, etc.) stored in a storage unit (specifically, an internal storage medium such as a flash memory 68, an external storage medium attached to a slot 51 or the like, etc.). In the exemplary embodiment, the term "processor" may include at least a CPU, a GPU, an ASIC (Application Specific Integrated Circuit), an FPGA (Field Programmable Gate Array), etc. In the exemplary embodiment, the computer may include at least one processor, and may further include a storage section such as a memory, for example.

The main body apparatus 2 includes the flash memory 68, and a DRAM (Dynamic Random Access Memory) 69, as an example of an internal storage medium. The flash memory 68 is a memory that is mainly used for storing various data to be stored in the main body apparatus 2. The DRAM 69 is a memory that is mainly used for temporarily storing various data to be used in information processing. The processor 63 reads and writes data from and into storage media such as the flash memory 68 and the DRAM 69 as appropriate, to execute various kinds of information processing.

The main body apparatus 2 includes various components as shown in FIG. 4. Hereinafter, the components will be briefly described. A storage medium slot interface (sometimes referred to as "slot I/F") 52 performs reading/writing of data from/into a storage medium (e.g., a dedicated memory card) attached to the storage medium slot 51, in response to an instruction from the processor 63. A second slot I/F 54 performs reading/writing of data from/into a storage medium attached to a second slot 53, in response to an instruction from the processor 63.

A network communication section 66 performs communication (e.g., Internet communication using wireless communication) with an external device via a network. A controller communication section 67 performs wireless communication (e.g., communication compliant with the standard of Bluetooth (registered trademark)) with the right controller 3 and/or the left controller 4.

A left terminal 50 is a terminal for performing wired communication between the processor 63 and the left controller 4. A right terminal 65 is a terminal for performing wired communication between the processor 63 and the right controller 3. A lower terminal 64 is a terminal for performing communication with another apparatus (e.g., a stationary monitor) via a cradle when the lower terminal 64 is attached to the cradle, for example.

A touch panel controller 70 generates data indicating a position at which a touch input was performed, based on a signal from a touch panel 71 disposed on the display surface of the display 72, and outputs the data to the processor 63. The display 72 displays an image generated by the processor 63 and/or an image acquired from the outside.

A codec circuit 74 controls input and output of sound data to and from a speaker 73 and a sound input/output terminal 75.

A power control section 61 controls supply of power from a battery 62 to each section of the main body apparatus 2 (i.e., each of sections to be supplied with power from the battery 62), based on an instruction from the processor 63, and starts or stops supply of power in response to pressing of a power button 60.

A volume button 59 is a button for adjusting the volume of sound outputted from the speaker 73, etc. In addition, a cooling fan 58 is a fan for cooling the interior of the main body apparatus 2.

The main body apparatus 2 includes various sensors such as a magnetic sensor 55, an ambient light sensor 56, a temperature sensor 57, an acceleration sensor 76, and an angular velocity sensor 77. The processor 63 can execute various kinds of processing, based on information from these sensors.

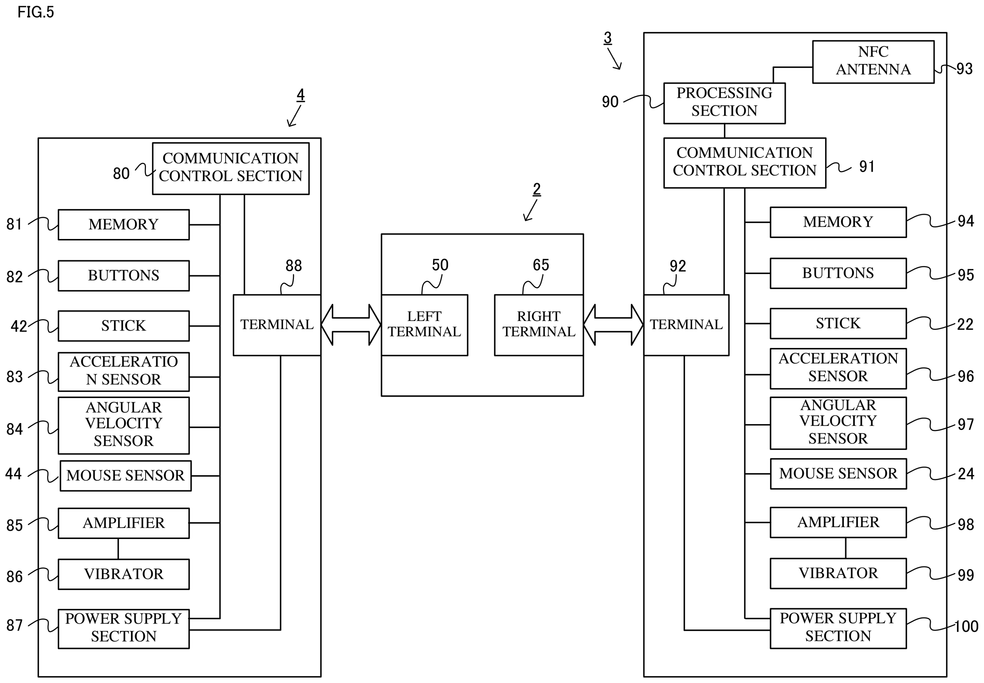

FIG. 5 is a block diagram showing an example of the internal configurations of the main body apparatus 2, the right controller 3, and the left controller 4. The details of the internal configuration of the main body apparatus 2 have already been shown in FIG. 4 and therefore are not shown in FIG. 5.

The left controller 4 includes a communication control section 80 which performs communication with the main body apparatus 2. As shown in FIG. 5, the communication control section 80 is connected to various components including a terminal 88. In a state where the left controller 4 is attached to the main body apparatus 2, the communication control section 80 performs wired communication with the main body apparatus 2 via the terminal 88, and in a state where the left controller 4 is detached from the main body apparatus 2, the communication control section 80 performs wireless communication (specifically, communication compliant with the standard of Bluetooth (registered trademark)) with the main body apparatus 2.

The left controller 4 includes a memory 81 such as a flash memory, for example. The communication control section 80 is formed by a processor such as a microcomputer (or a microprocessor), for example, and executes various kinds of processing by executing firmware stored in the memory 81.

The left controller 4 includes each button 82 (specifically, the buttons 32 to 34, etc.) and the stick 42. Each button 82 and the stick 42 output information regarding operations performed thereon, to the communication control section 80.

The left controller 4 includes an inertial sensor. Specifically, the left controller 4 includes an acceleration sensor 83 and an angular velocity sensor 84, as inertial sensors. The acceleration sensor 83 detects the magnitudes of accelerations along predetermined three axial directions (e.g., the x, y, and z-axis directions). The acceleration sensor 83 may detect an acceleration along one axial direction or accelerations along two axial directions. The angular velocity sensor 84 detects angular velocities about the predetermined three axes. The angular velocity sensor 84 may detect an angular velocity about one axis or angular velocities about two axes. The angular velocity sensor may be referred to as a "gyro sensor". The acceleration sensor 83 and the angular velocity sensor 84 are connected to the communication control section 80. The detection results of the acceleration sensor 83 and the angular velocity sensor 84 are repeatedly outputted to the communication control section 80 at appropriate timings. Each of the right controller 3 and the left controller 4 may include one of the acceleration sensor and the angular velocity sensor or may include another sensor, as inertial sensors.

The left controller 4 includes the mouse sensor 44. The mouse sensor 44 acquires data for calculating movement or the like of the left controller 4 placed on a placement surface. The data acquired by the mouse sensor 44 is repeatedly outputted to the communication control section 80 at appropriate timings.

The communication control section 80 acquires information regarding inputs (information regarding operations on the buttons and the stick and detection results from the sensors) from each input section (specifically, each button 82, the stick 42, and the respective sensors 83, 84, and 44). The communication control section 80 transmits the acquired information or operation data including information obtained by performing predetermined processing on the acquired information, to the main body apparatus 2. The operation data is repeatedly transmitted at a rate of one time per predetermined period.

By the above operation data being transmitted to the main body apparatus 2, the main body apparatus 2 can acquire inputs performed on the left controller 4. That is, the main body apparatus 2 can determine operations on each button 82 and the stick 42, based on the operation data. In addition, the main body apparatus 2 can calculate information regarding the movement and/or orientation of the left controller 4, based on the operation data (specifically, the detection results of the acceleration sensor 83 and/or the angular velocity sensor 84). Moreover, the main body apparatus 2 can calculate information regarding mouse operations performed on the left controller 4, based on the operation data (specifically, the detection results of the mouse sensor 44).

The left controller 4 includes an amplifier 85 and a vibrator 86. The amplifier 85 amplifies control signals received from the communication control section 80 and generates drive signals. The vibrator 86 performs vibrating motion in response to the drive signals generated by the amplifier 85 to vibrate the left controller 4.

The left controller 4 includes a power supply section 87. The power supply section 87 includes a battery and a power control circuit. The power control circuit is connected to the battery and supplies power to each section of the left controller 4 (specifically, each of sections to be supplied with power from the battery).

As shown in FIG. 5, the right controller 3 includes a communication control section 91 which is composed of a processor or the like and performs communication with the main body apparatus 2. The right controller 3 includes a memory 94 connected to the communication control section 91. The communication control section 91 is connected to components including a terminal 92. The communication control section 91 and the memory 94 have the same functions as the communication control section 80 and the memory 81 of the left controller 4. Therefore, the communication control section 91 is capable of performing communication with the main body apparatus 2 by both of wired communication via the terminal 92 and wireless communication not via the terminal 92, and controls communication that the right controller 3 performs with the main body apparatus 2.

The right controller 3 includes input sections similar to those of the left controller 4. Specifically, the right controller 3 includes each button 95 (A button 12, B button 13, X button 14, Y button 15, etc.), the stick 22, an inertial sensor (acceleration sensor 96 and angular velocity sensor 97), and the mouse sensor 24. These input sections have the same functions as those of the left controller 4 and operate in the same manner.

The right controller 3 includes an amplifier 98, a vibrator 99, and a power supply section 100. The amplifier 98, the vibrator 99, and the power supply section 100 have the same functions as the amplifier 85, the vibrator 86, and the power supply section 87 of the left controller 4, respectively, and operate in the same manner.

### [Manner of Holding Controller]

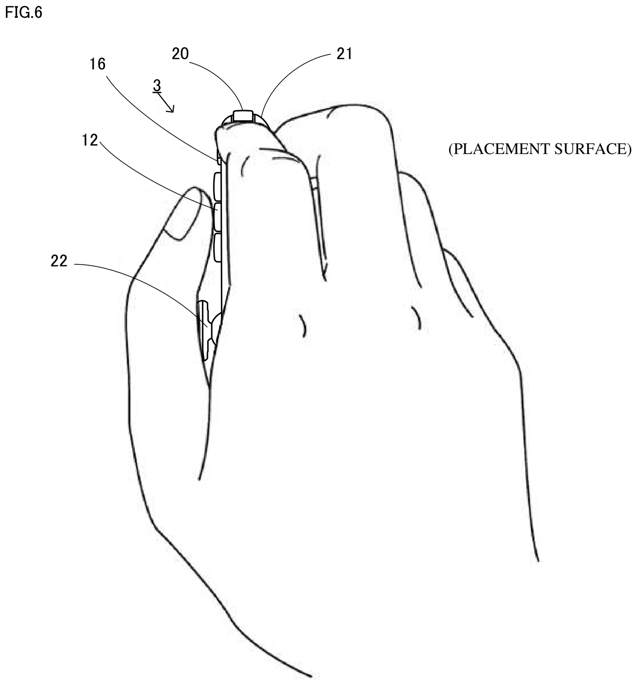

FIG. 6 is a schematic view showing an example of a state where the user holds the right controller 3 by the right hand, places the right controller 3 on a placement surface, and uses the right controller 3 as a mouse, i.e., a state of performing a mouse operation. As shown in FIG. 6, the front portion of the right controller 3 faces frontward and the left portion thereof faces leftward. The palm of the right hand of the user covers the upper portion side of the right controller 3. The thumb of the right hand of the user is placed on the left portion side of the right controller 3. The thumb of the right hand of the user is put on the A button 12, for example. The index finger of the right hand of the user is put on the R button 20, for example, and the middle finger of the right hand of the user is put on the ZR button 21, for example. The user can operate the R button 20 and the ZR button 21 by the index finger or the middle finger of the right hand. The user can operate each input portion provided at the left portion, by the thumb of the right hand. Also, when the user uses the left controller 4 as a mouse by the left hand, the user can hold the left controller 4 by the left hand and use the left controller 4 on a placement surface in the same manner. At this time, the right portion of the left controller 4 faces rightward.

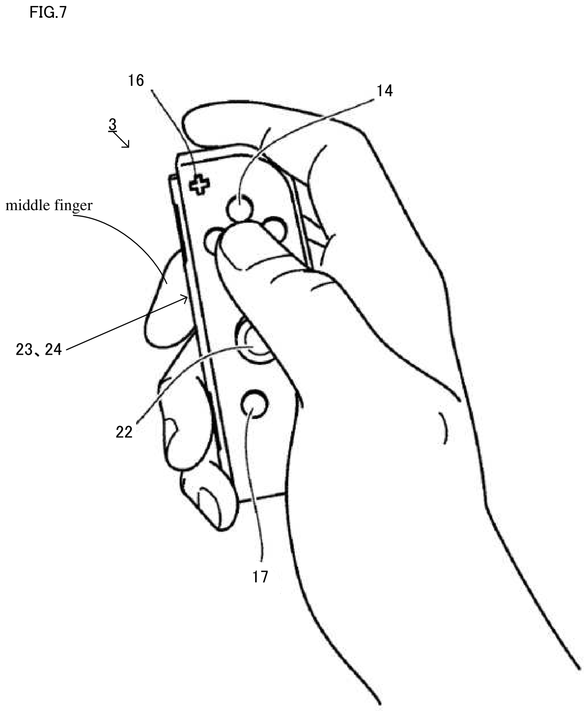

FIG. 7 is a schematic view showing an example of a state where the user operates the right controller 3 in the air while holding the right controller 3 by the right hand in a longitudinal holding manner. As shown in FIG. 7, in a state where the right controller 3 is detached from the main body apparatus 2, the right controller 3 can be used in the air by being held such that the longitudinal direction of the right controller 3 is along the up-down direction or the front-rear direction for the operating user. The user can operate the stick 22 by the thumb of the right hand, for example, (this operation may be referred to as "stick operation"). In addition, the user can perform an operation of swinging the held right controller 3 (which may be referred to as "swing operation") and an operation of changing the orientation of the held right controller 3 (which may be referred to as "orientation change operation"). Also, when the user uses the left controller 4 by the left hand in a state where the left controller 4 is detached from the main body apparatus 2, the user can use the left controller 4 in the same manner.

### [Operation Mode of Controller]

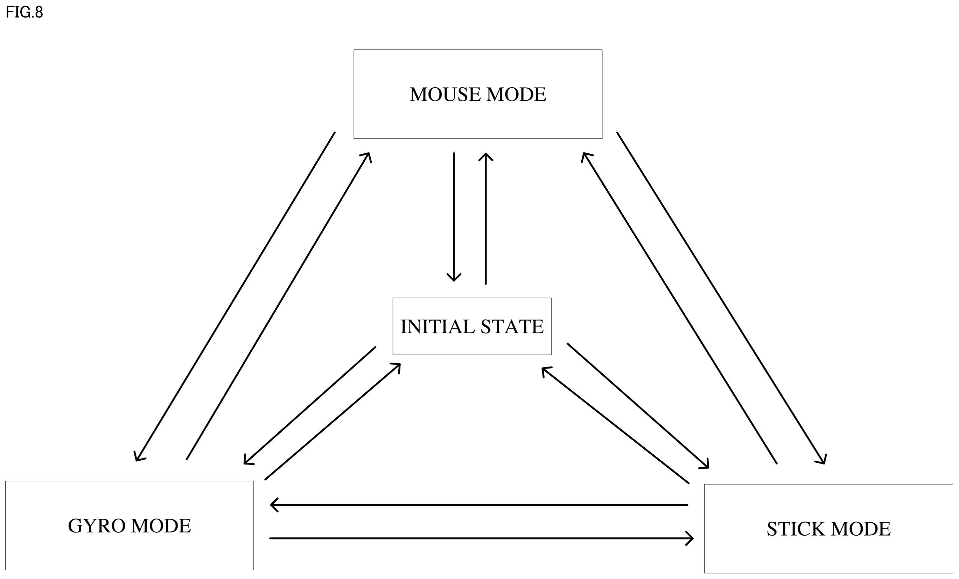

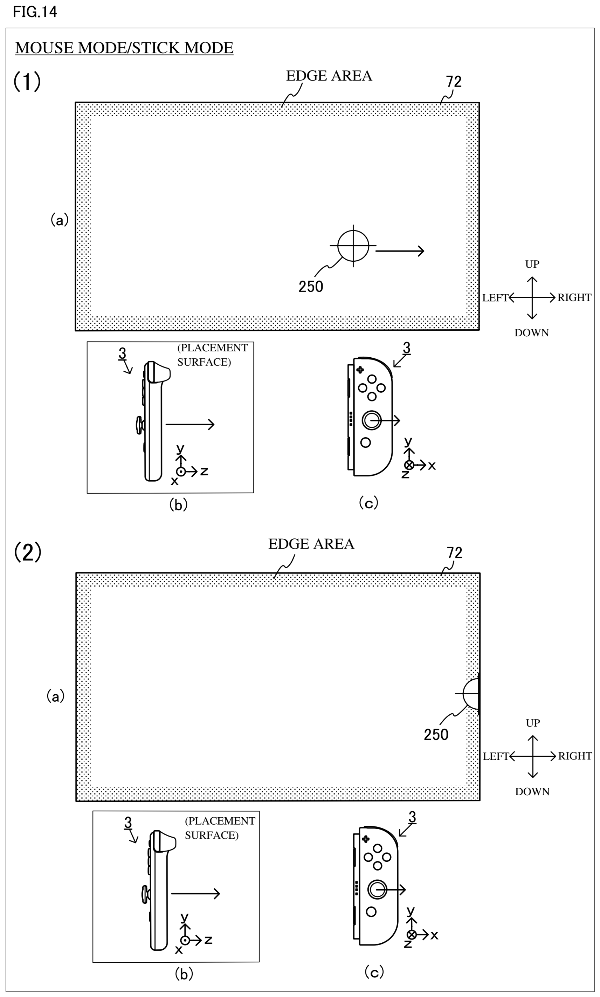

FIG. 8 illustrates operation modes of the controller and shift between the operation modes. As shown in FIG. 8, the operation modes (which may be simply referred to as "modes") of the controller include a "mouse mode", a "gyro mode", and a "stick mode". The mouse mode is an operation mode in which a virtual object is controlled based on an output of the mouse sensor. The gyro mode is an operation mode in which a virtual object is controlled based on an output of the gyro sensor. The stick mode is an operation mode in which a virtual object is controlled based on an output through a stick operation. As described later with reference to FIG. 14, etc., an aim sight 250 which is a pointer is displayed on the display 72, as an example of a virtual object. The aim sight is an example of a pointer, and may have any shape, e.g., a cursor having an arrow shape or the like, a hand icon, or a frame. The pointer is an example of a virtual object to be controlled, and the virtual object may be, for example, a character object, or another object. An "initial state" is a state that can be set in a case where the mode has not been determined to be any operation mode or a case where the operation mode is shifted between the mouse mode, the gyro mode, and the stick mode. In another exemplary embodiment, the initial state may not necessarily be provided.

As shown in FIG. 8, in the exemplary embodiment, each mode can be shifted to another mode. A specific manner of shift will be described later.

### [Details of Information Processing in Exemplary Embodiment]

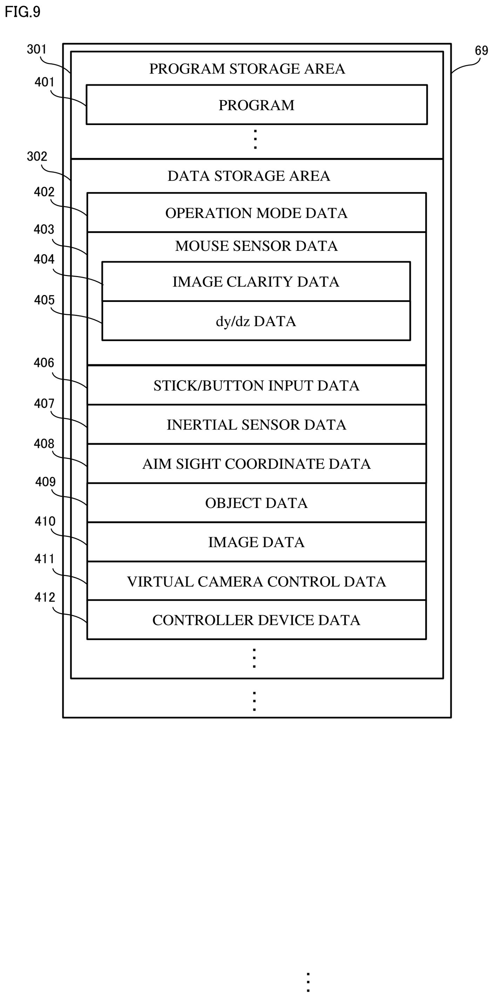

Next, with reference to FIG. 9 to FIG. 16, the information processing in the exemplary embodiment will be described in detail. In the exemplary embodiment, the operation mode can be shifted as described above, and the position of the aim sight 250 is controlled based on an operation according to the operation mode. Hereinafter, a case where the right controller 3 is used will be described as an example. A case where the left controller 4 is used can be applied in the same manner and therefore the description thereof is omitted.

### [Used Data]

Next, various data to be stored in the DRAM 69 will be described. FIG. 9 shows an example of data to be stored in the DRAM 69 of the main body apparatus 2. As shown in FIG. 9, the DRAM 69 includes at least a program storage area 301 and a data storage area 302.

At least a program 401 is stored in the program storage area 301. At least operation mode data 402, mouse sensor data 403, stick/button input data 406, inertial sensor data 407, aim sight coordinate data 408, object data 409, image data 410, virtual camera control data 411, and controller device data 412 are stored in the data storage area 302.

The program 401 is a game program for executing game processing.

The operation mode data 402 is data indicating which the operation mode is among the mouse mode, the gyro mode, and the stick mode.

The mouse sensor data 403 is data about an output of the mouse sensor 24, and includes image clarity data 404 and dy/dz data 405.

The image clarity data 404 is data calculated by the mouse sensor 24 and indicates the clarity of a mouse sensor image. The image clarity data 404 is calculated based on the degree of brightness of the mouse sensor image and/or the degree of how many feature points the mouse sensor image has, for example. The image clarity data 404 may be calculated based on output data from the mouse sensor 24, by the communication control section 91, the processor 63, or the like. The degree of brightness of the mouse sensor image or the degree of how many feature points the mouse sensor image has may be directly used as the image clarity data. The image clarity data 404 may be calculated based on another element. When the clarity indicated by the image clarity data 404 is equal to or greater than a specified value, the opening 23 for the mouse sensor 24 can be estimated to be closed by the placement surface or the like. Instead of data indicating the clarity of the mouse sensor image, other data may be used as long as whether the opening 23 for the mouse sensor 24 is closed can be estimated by the data.

The dy/dz data 405 is output data from the mouse sensor 24, and indicates a movement distance per frame time (which may be referred to as "dy/dz") in the y-axis direction and the z-axis direction (i.e., yz plane; see FIG. 2) in the right controller coordinate system relative to the placement surface or the like when the opening 23 for the mouse sensor 24 is closed by the placement surface or the like. The movement distance dy/dz may be calculated based on output data from the mouse sensor 24, by the communication control section 91, the processor 63, or the like.

The stick/button input data 406 is data indicating operations performed on the stick 22 and the buttons 95 of the right controller 3.

The inertial sensor data 407 is data outputted from the inertial sensor of the right controller 3, and is data with which the accelerations in the directions of the x, y, and z axes and the angular velocities around the x, y, and z axes in the right controller coordinate system (see FIG. 2) can be calculated, for example. Using the inertial sensor data, the orientation, movement, and the like of the right controller 3 can be calculated, for example.

The aim sight coordinate data 408 is data indicating the coordinates (which may be simply referred to as "aim sight coordinates") of the aim sight 250 in a screen coordinate system obtained by converting a virtual space captured by a virtual camera into a plane coordinate system. In the mouse mode, the aim sight coordinates move based on the dy/dz data, in the stick mode, the aim sight coordinates move based on an operation on the stick 22, and in the gyro mode, the aim sight coordinates move based on orientation change of the right controller 3.

The object data 409 is data of a virtual object placed in a virtual space, and is data of virtual objects such as a shot launched in the direction of the aim sight 250, a player character, an opponent character, and a ground, for example.

The image data 410 is image data such as an image of the aim sight 250 which is a virtual object, an animation image thereof, a background, and a virtual effect. The image of the aim sight 250 is placed in the screen coordinate system and displayed on the display 72 or the like. The aim sight 250 may be displayed on the display 72 or the like by being placed in a virtual space and then captured by a virtual camera, instead of being placed in the screen coordinate system. That is, the aim sight 250 may be treated as the object data 409, instead of the image data 410.

The virtual camera control data 411 is data for controlling a virtual camera which is placed in a virtual space and captures the virtual space.

The controller device data 412 is data indicating devices (e.g., the mouse sensor, the acceleration sensor, the angular velocity sensor, and the stick) provided to the controller connected to the main body apparatus 2. When the controller is connected to the main body apparatus 2, data indicating the devices provided to the controller is transmitted from the controller to the main body apparatus 2.

Besides, various data to be used in a rendering process and the like are stored in the DRAM 69 as necessary.

### [Example of Details of Information Processing]

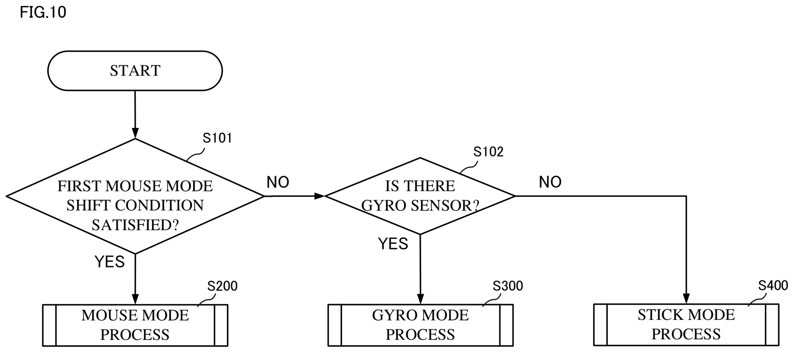

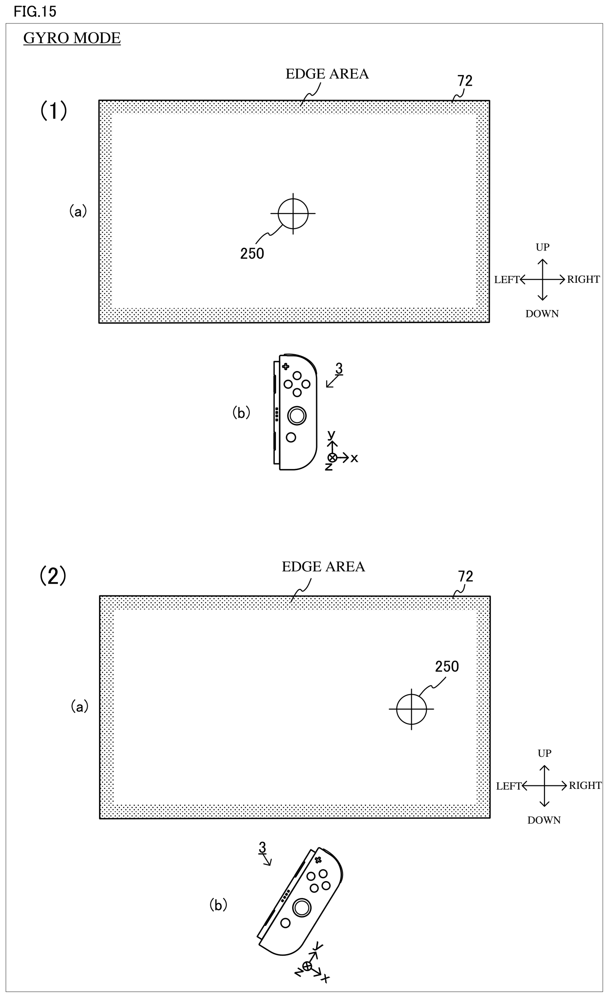

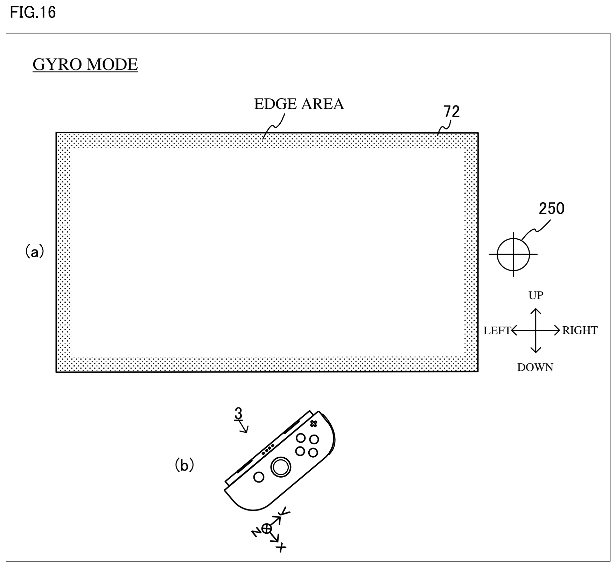

Next, with reference to flowcharts and the like, processing according to the exemplary embodiment will be described. FIG. 10 to FIG. 13 are examples of flowcharts showing the processing according to the exemplary embodiment. FIG. 14 illustrates control of the aim sight 250 in the mouse mode and the stick mode. FIG. 15 and FIG. 16 illustrate control of the aim sight 250 in the gyro mode. Hereinafter, mainly, processes characteristic to the exemplary embodiment will be described, and the description of other processes such as a rendering process is basically omitted. The following processes are executed at specified intervals (e.g., frame intervals in processing executed per 1/60 s).

When this game processing is started, in step S101 in FIG. 10, the processor 63 determines whether or not a first mouse mode shift condition is satisfied, based on the mouse sensor data 403. The first mouse mode shift condition in the exemplary embodiment is a condition with which it can be estimated that the right controller 3 is being operated by a mouse operation. An example of the first mouse mode shift condition is a condition that a clarity indicated by the image clarity data 404 is equal to or higher than a specified value and thus the opening 23 of the mouse sensor 24 is estimated to be closed, and that a state in which the movement distance dy/dz per frame of the right controller 3 is equal to or greater than a specified value (e.g., 0.1 mm or more) has continued for a specified number of frames (e.g., 5 frames) or more. If a result of the determination in step S101 is YES, the process proceeds to a mouse mode process in step S200, and in a case of NO, the process proceeds to step S102.

In step S102, the processor 63 determines whether or not the right controller 3 connected to the main body apparatus 2 has the gyro device (e.g., angular velocity sensor), based on the controller device data 412. This determination may be performed by another method. For example, when the main body apparatus 2 is receiving information about a detection result of the angular velocity sensor repeatedly outputted at appropriate timings from the right controller 3, it may be determined that the right controller 3 has the gyro device. If a result of the determination in step S102 is YES, the process proceeds to a gyro mode process in step S300, and in a case of NO, the process proceeds to a stick mode process in step S400. The mode during execution of the mouse mode process is the mouse mode, the mode during execution of the stick mode process is the stick mode, and the mode during execution of the gyro mode process is the gyro mode.

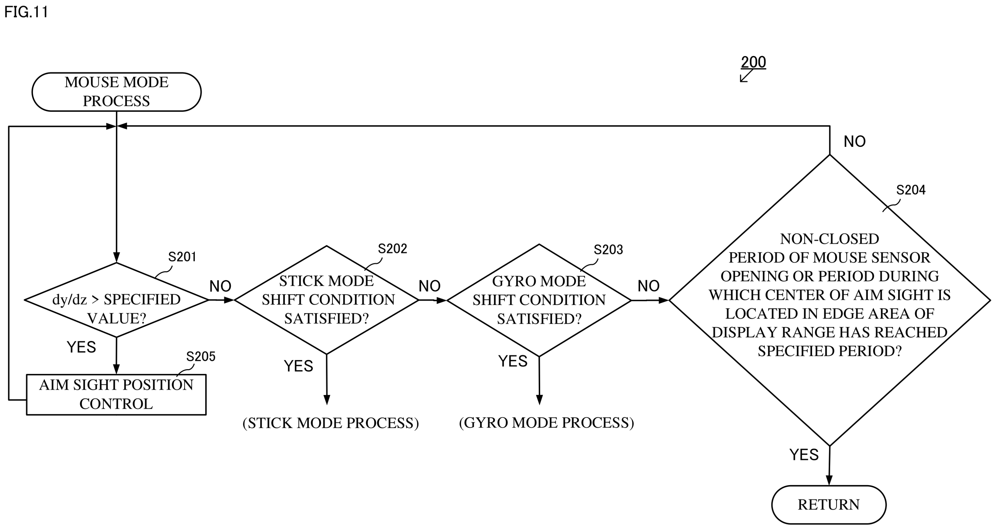

In step S201 in FIG. 11, the processor 63 determines whether or not dy/dz indicated by the latest dy/dz data 405 is greater than a specified value (e.g., 0.1 mm). Through this determination, whether or not the controller is moving on the placement surface by a mouse operation can be estimated. This determination has only to make it possible to estimate whether or not the controller is moving on the placement surface by a mouse operation, and may be determination as to whether or not dy/dz indicated by the latest dy/dz data is greater than 0 (zero). If a result of the determination in step S201 is YES, the process proceeds to step S205, and in a case of NO, the process proceeds to step S202.

In step S205, the processor 63 performs aim sight position control, based on the dy/dz data 405 and the aim sight coordinate data 408. Specifically, the processor 63 moves the aim sight position indicated by the aim sight coordinate data 408, in a direction indicated by dy/dz indicated by the latest dy/dz data 405, by a distance corresponding to the magnitude of the dy/dz.

Here, FIG. 14 illustrates control for the aim sight position in the mouse mode and the stick mode. Through the processing in step S205, for example, as shown in (b) of FIG. 14(1), in a case where the right controller 3 placed on the placement surface is operated by a mouse operation to move in the z-axis plus direction, the aim sight 250 displayed on the display 72 moves by a distance according to the mouse operation in the right direction as shown in (a) of FIG. 14(1). Although not shown, also in a case where the right controller 3 is operated by a mouse operation in another direction on the placement surface, similarly, the aim sight 250 displayed on the display 72 moves in a direction and by a distance according to the mouse operation.

In the aim sight position control in step S205, the processor 63 may perform restriction so that the center of the aim sight 250 does not move to the outside of the display area (which may be simply referred to as a "display area") of the display 72. For example, in a state in which the center of the aim sight 250 is located at a right end of the display area as shown in (a) of FIG. 14(2), even if the right controller 3 placed on the placement surface is operated by a mouse operation to move in a z-axis plus direction (see FIG. 2) as shown in (b) of FIG. 14(2), the aim sight 250 is controlled so as not to move in the right direction any more. Thus, a part of the aim sight 250 is always displayed on the display 72. The movement restriction for the aim sight 250 is not limited thereto, and for example, movement restriction may be performed so that the entirety of the aim sight 250 is located within the display area. Then, the process returns to step S201.

Irrespective of the operation mode and irrespective of whether or not the aim sight is moving, the processor 63 launches, for example, a virtual object of a shot in a direction indicated by the aim sight in accordance with a button operation (e.g., an operation on the R button 20), based on the stick/button input data 406.

Returning to FIG. 11, in step S202, the processor 63 determines whether or not a stick mode shift condition is satisfied, based on the stick/button input data 406. In the exemplary embodiment, the stick mode shift condition is a condition that the stick 22 is operated. Thus, in the mouse mode, the process shifts to the stick mode process in accordance with at least satisfaction of the stick mode shift condition. The mouse mode process in FIG. 11 is merely an example, and in another exemplary embodiment, a condition for shifting from the mouse mode process to the stick mode process may include only that it is determined that the stick mode shift condition is satisfied. If a result of the determination in step S202 is YES, the process proceeds to the stick mode process, and in a case of NO, the process proceeds to step S203.

In step S203, the processor 63 determines whether or not a gyro mode shift condition is satisfied, based on the inertial sensor data 407. In the exemplary embodiment, the gyro mode shift condition involves estimating whether or not the controller is operated by a swing operation by a user. As an example, the gyro mode shift condition is a condition that the right controller 3 is swung at an acceleration equal to or greater than a specified value (e.g., 0.2 G or more). Thus, in the mouse mode, the process shifts to the gyro mode process in accordance with at least satisfaction of the gyro mode shift condition. The mouse mode process in FIG. 11 is merely an example, and in another exemplary embodiment, the condition for shifting from the mouse mode process to the gyro mode process may include only that it is determined that the gyro mode shift condition is satisfied. If a result of the determination in step S203 is YES, the process proceeds to the gyro mode process, and in a case of NO, the process proceeds to step S204.

In step S204, the processor 63 performs determination as to a condition for estimating whether or not the user has an intention to continue a mouse operation. In the exemplary embodiment, as an example, the processor 63 determines whether or not a non-closed period of the mouse sensor opening or a period during which the center of the aim sight is located in an edge area of the display range has reached a specified period, based on the image clarity data 404 and the aim sight coordinate data 408. Specifically, the processor 63 measures a period during which the opening 23 of the mouse sensor 24 cannot be estimated to be closed by the placement surface or the like, based on the image clarity data 404, and measures a period during which the center of the aim sight 250 is located in an edge area of the display range, based on the aim sight coordinate data 408, thereby determining whether or not either period has reached a specified period (e.g., 3 s). As shown in FIG. 14, an edge area having a specified width is set in advance on the display area of the display 72. In FIG. 14 to FIG. 16, for convenience sake, the edge area is shown so as to be visually seen, but in actuality, the edge area may not necessarily be displayed. If a result of the determination in step S204 is YES, the process returns to step S101 in FIG. 10, and in a case of NO, the process returns to step S201.

In step S204, the processor 63 may determine whether or not the non-closed period of the mouse sensor opening has reached a first period (e.g., 3 s) or the period during which the center of the aim sight is located in the edge area of the display range has reached a second period (e.g., 2 s or 4 s) different from the first period. In step S204, in a case where the non-closed period of the mouse sensor opening and the period during which the center of the aim sight is located in the edge area of the display range overlap each other at least partially, the processor 63 may regard these two periods as one integrated period including the overlapping part, and determine whether or not the one integrated period has reached a specified period (e.g., 3 s). Instead of the period during which the center of the aim sight is located in the edge area of the display range, a period during which at least a part of the aim sight is located in the display area may be measured, for example.

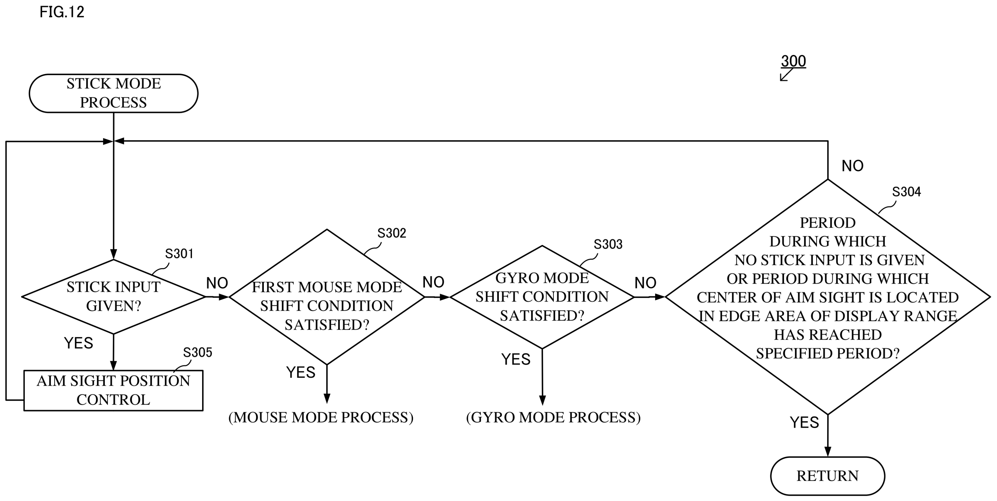

In step S301 in FIG. 12, the processor 63 determines whether or not a stick input has been given, based on the stick/button input data 406. If a result of the determination in step S301 is YES, the process proceeds to step S305, and in a case of NO, the process proceeds to step S302.

In step S305, the processor 63 performs aim sight position control, based on the stick input. Specifically, the processor 63 moves the aim sight position indicated by the aim sight coordinate data 408 in a direction indicated by the stick input, by a distance according to the magnitude of the stick input. Through the processing in step S305, for example, as shown in (c) of FIG. 14(1), in a case where the stick 22 is operated to be tilted in the x-axis plus direction, the aim sight 250 displayed on the display 72 moves in the right direction by a distance according to the stick operation, as shown in (a) of FIG. 14(1). As in the aim sight position control in step S205 in the mouse mode process, the center of the aim sight 250 may be restricted from moving to the outside of the display area (see FIG. 14(2)). Then, the process returns to step S301.

In step S302, the processor 63 determines whether or not the first mouse mode shift condition is satisfied, as in step S101 in FIG. 10. Thus, in the stick mode, the process shifts to the mouse mode process in accordance with at least satisfaction of the first mouse mode shift condition. The stick mode process in FIG. 12 is merely an example, and in another exemplary embodiment, a condition for shifting from the stick mode process to the mouse mode process may include only that the first mouse mode shift condition is satisfied. If a result of the determination in step S302 is YES, the process proceeds to the mouse mode process, and in a case of NO, the process proceeds to step S303.

In step S303, the processor 63 determines whether or not the gyro mode shift condition is satisfied, as in step S203 in FIG. 11. Thus, in the stick mode, the process shifts to the gyro mode process in accordance with at least satisfaction of the gyro mode shift condition. The stick mode process in FIG. 12 is merely an example, and in another exemplary embodiment, the condition for shifting from the stick mode process to the gyro mode process may include only that the gyro mode shift condition is satisfied. If a result of the determination in step S303 is YES, the process proceeds to the gyro mode process, and in a case of NO, the process proceeds to step S304.

In step S304, the processor 63 performs determination as to a condition for estimating whether or not the user has an intention to continue a stick operation. In the exemplary embodiment, for example, the processor 63 determines whether or not a period during which no stick input is given or a period during which the center of the aim sight is located in the edge area of the display range has reached a specified period, based on the stick/button input data 406 and the aim sight coordinate data 408. If a result of the determination in step S304 is YES, the process returns to step S101 in FIG. 10, and in a case of NO, the process returns to step S301.

In step S304, the processor 63 may determine whether or not the period during which no stick input is given has reached the first period (e.g., 3 s) or the period during which the center of the aim sight is located in the edge area of the display range has reached the second period (e.g., 2 s or 4 s) different from the first period. In step S304, in a case where the period during which no stick input is given and the period during which the center of the aim sight is located in the edge area of the display range overlap each other at least partially, the processor 63 may regard these two periods as one integrated period including the overlapping part, and determine whether or not the one integrated period has reached a specified period (e.g., 3 s). Instead of the period during which the center of the aim sight is located in the edge area of the display range, a period during which at least a part of the aim sight is located in the display area may be measured, for example.

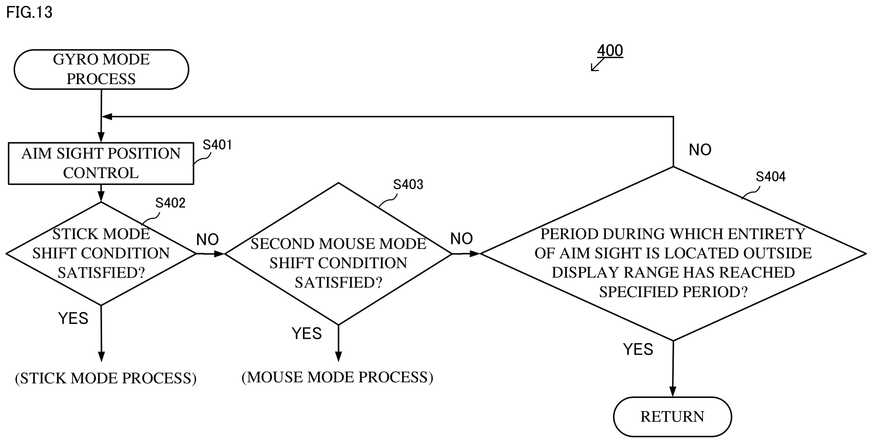

In step S401 in FIG. 13, the processor 63 performs aim sight position control, based on the inertial sensor data 407. Specifically, the processor 63 performs control so as to display the aim sight 250 at a position according to the orientation of the right controller 3, based on a correspondence relationship (which may be referred to as an "orientation-aim sight relationship") in which the orientation of the right controller 3 indicated by the inertial sensor data 407 and the aim sight position indicated by the aim sight coordinate data 408 are associated with each other.

With reference to FIG. 15 and FIG. 16, an example of the control will be described. For example, in a case where the orientation of the right controller 3 is an orientation shown in (b) of FIG. 15(1), the aim sight 250 is displayed at the center position on the screen, for example, as shown in (a) of FIG. 15(1). Then, for example, in a case where the orientation of the right controller 3 becomes an orientation shown in (b) of FIG. 15(2) (i.e., an orientation rotated rightward with respect to the z-axis plus direction from the orientation shown in (b) of FIG. 15(1)), the aim sight 250 is displayed at a position shown in (a) of FIG. 15(2) (i.e., a position rightward of the position shown in (a) of FIG. 15(1)). Then, for example, in a case where the orientation of the right controller 3 becomes an orientation shown in FIG. 16(b) (an orientation further rotated rightward with respect to the z-axis plus direction from the orientation shown in (b) of FIG. 15(2)), the aim sight 250 moves to a position shown in (a) of FIG. 16 (i.e., a position further rightward of the position shown in (a) of FIG. 15(2)). Thus, as shown in FIG. 16(b), in accordance with an operation of rotating the right controller 3 (i.e., an orientation change operation), the aim sight 250 can be located outside the display area, though not displayed on the display 72. In this case, processing of actually moving the aim sight 250 outside the display area may be performed, or only processing of merely calculating coordinates corresponding to the aim sight 250 may be performed. The same applies to a case where the orientation of the right controller 3 becomes another orientation, and therefore specific description thereof is omitted. Then, the process proceeds to step S402.

In step S402, the processor 63 determines whether or not the stick mode shift condition is satisfied, as in step S202 in FIG. 11. If a result of the determination in step S402 is YES, the process proceeds to the stick mode process, and in a case of NO, the process proceeds to step S403.

In step S403, the processor 63 determines whether or not a second mouse mode shift condition is satisfied, based on the mouse sensor data 403. For example, the second mouse mode shift condition is a condition that requires a longer time for determination than the first mouse mode shift condition. For example, the second mouse mode shift condition is a condition that the clarity indicated by the image clarity data 404 is equal to or higher than a specified value and thus the opening 23 of the mouse sensor 24 is estimated to be closed, and that a state in which the movement distance dy/dz per frame of the right controller 3 is equal to or greater than a specified value (e.g., 0.1 mm or more) has continued for a second specified number of frames (e.g., 180 frames) or more. The "second specified number" is greater than the "first specified number" in the processing in step S101 in FIG. 10 and step S302 in FIG. 12. Thus, in the gyro mode, the process shifts to the mouse mode process in accordance with at least satisfaction of the second mouse mode shift condition. The gyro mode process in FIG. 13 is merely an example, and in another exemplary embodiment, the condition for shifting from the gyro mode process to the mouse mode process may include only that it is determined that the second mouse mode shift condition is satisfied.

In the gyro mode, when the aim sight 250 is operated through an operation of changing the orientation of the right controller 3, the user performs an operation of changing the orientation by holding the right controller 3 as shown in FIG. 7, and therefore it is likely that the user grasps the right controller 3 in the hand and the opening 23 of the mouse sensor is closed by the middle finger of the right hand or the like. In this case, the mode can shift from the gyro mode to the mouse mode against the user's intention. Accordingly, in the exemplary embodiment, control is performed so that determination to shift from the gyro mode to the mouse mode is less likely to be made than determination to shift from the stick mode to the mouse mode. As an example of a method for performing control so that the determination is less likely to be made, the determination for shifting from the gyro mode to the mouse mode is configured to require a comparatively long time as described above. In this way, the operation mode is inhibited from shifting from the gyro mode to the mouse mode against the user's intention. When operating the aim sight 250 through a stick operation in the stick mode, the user often performs the operation without grasping the right controller 3 in the hand and therefore the opening 23 of the mouse sensor is less likely to be closed by the middle finger of the right hand or the like. If a result of the determination in step S403 is YES, the process proceeds to the mouse mode process, and in a case of NO, the process proceeds to step S404.

In step S404, the processor 63 determines whether or not a period during which the entirety of the aim sight 250 is located outside the display range has reached a specified period (e.g., 3 s), based on the aim sight coordinate data 408. If a result of the determination in step S404 is YES, the process returns to step S101 in FIG. 10, and in a case of NO, the process returns to step S401.

According to the exemplary embodiment described above, in a case where operation modes include at least the mouse mode in which the aim sight is operated based on an output of the mouse sensor, the gyro mode in which the aim sight is operated based on an output of the inertial sensor, and the stick mode in which the aim sight is operated based on a stick input, it is possible to shift from the mouse mode to either the gyro mode or the stick mode. Therefore, it is possible to immediately shift the operation mode from the mouse mode to the gyro mode or the stick mode in accordance with the user's intention.

According to the exemplary embodiment, further, it is possible to shift from the gyro mode to either the mouse mode or the stick mode. Therefore, it is possible to immediately shift the operation mode from the gyro mode to the mouse mode or the stick mode in accordance with the user's intention. According to the exemplary embodiment, further, it is possible to shift from the stick mode to either the mouse mode or the gyro mode. Therefore, it is possible to immediately shift the operation mode among three operation modes in accordance with the user's operation.

According to the exemplary embodiment, as described with reference to FIG. 11, if results of the determination in steps S201 and S202 are NO and a result of the determination in step S203 is YES, the operation mode shifts from the mouse mode to the gyro mode. In a state in which a determination as YES is obtained in step S201, even if an output of the inertial sensor brings about a determination as YES in step S203, the operation mode does not shift from the mouse mode to the gyro mode. Thus, according to the exemplary embodiment, in a case where a mouse operation is being performed in the mouse mode, the mouse mode continues irrespective of an output of the inertial sensor. Therefore, the operation mode can be inhibited from unintentionally shifting to the gyro mode during a mouse operation when a condition for shifting to the gyro mode is satisfied during a mouse operation, e.g., when a swinging motion of the controller placed on the placement surface is detected.

According to the exemplary embodiment, in a case where it is determined that none of a mouse operation, a stick operation, and an orientation change operation have been performed, if a specified condition (see S204, S304, S404) is satisfied, the gyro mode is set (see FIG. 10 to FIG. 13). Here, the controller can be swung also in the mouse mode and the stick mode. Therefore, in order to detect a user's intention to shift the operation mode to the gyro mode, it is necessary to detect a swing of the controller that is great to a certain extent, for example. Meanwhile, in a case of performing control so that the operation mode is shifted to the gyro mode when a swing of the controller that is great to a certain extent is detected, it might become difficult to shift the operation mode to the gyro mode, despite a user's intention. Accordingly, in the exemplary embodiment, as described above, in a case where it is estimated that a user is not doing any operation, for example, if outputs of the mouse sensor and the inertial sensor do not indicate a movement of the controller and a stick operation is not performed, the gyro mode is set. Thus, operability according to the user's intention is realized. In FIG. 10 to FIG. 13, for example, determination processing may not necessarily be performed in steps S204, S304, and S404, and in each of a case of being determined as NO in step S203, a case of being determined as NO in step S303, and a case of being determined as NO in step S403, the process may return to step S101.

According to the exemplary embodiment, the controller not having a mouse sensor or not having an inertial sensor may be connected to the main body apparatus 2 and used. In a case where the controller not having a mouse sensor is connected to the main body apparatus 2 and used, the operation mode is shifted between the stick mode and the gyro mode in accordance with the processes shown in FIG. 10 to FIG. 13. In a case where the controller not having an inertial sensor is connected to the main body apparatus 2 and used, the operation mode is shifted between the mouse mode and the stick mode in accordance with the processes shown in FIG. 10 to FIG. 13. Thus, according to the exemplary embodiment, the controller not having a mouse sensor or not having an inertial sensor can be used. Both of the controller not having a mouse sensor or not having an inertial sensor, and the controller having a mouse sensor, a stick, and an inertial sensor, may be connected to the main body apparatus 2, and for example, two users may operate the respective controllers to operate aim sights. Three or more controllers may be connected to the main body apparatus 2, and each controller may be operated to operate an aim sight. In the exemplary embodiment, operation modes are set for respective controllers.

### [Modifications]

In the above exemplary embodiment, the color, the shape, or the like of the aim sight 250 may be changed in accordance with the operation mode. Also in such a case, the changed aim sights can be considered to be substantially the same aim sight.

In the above exemplary embodiment, the display position of the aim sight immediately after the operation mode is shifted is not limited. For example, the aim sight may be displayed at the same position as before the operation mode is shifted, may be displayed at the center position on the screen, or may differ depending on the operation mode after shifting. In the mouse mode and the stick mode, the aim sight may move to the outside of the display screen, or in the gyro mode, the aim sight may not necessarily be able to move to the outside of the display screen.

In the above exemplary embodiment, operation contents assigned to the respective buttons may be switched in accordance with the operation mode. For example, in the mouse mode, a shot may be launched in accordance with an operation on the A button 12; in the stick mode, a shot may be launched in accordance with an operation on the ZR button 21; and in the gyro mode, a shot may be launched in accordance with an operation on the R button 20.

In the above exemplary embodiment, the content of a game performed in a virtual space may differ depending on the operation mode. For example, depending on the operation mode, the type of a shot to be launched may differ, or a range in which a player object to be operated by a user can move may differ.

In the above exemplary embodiment, the example in which shifting to a shift destination operation mode is performed in accordance with a device output to be used in aim sight position control in the shift destination operation mode, has been shown. However, for example, shifting to a shift destination operation mode may be performed in accordance with a device output different from a device output to be used in aim sight position control in the shift destination operation mode. For example, instead of shifting the operation mode to the mouse mode in accordance with a mouse sensor output, the operation mode may be shifted from the gyro mode or the stick mode to the mouse mode in accordance with a condition that an inertial sensor output has indicated for a specified period (e.g., 0.5 s) that the x-axis minus direction in the right controller coordinate system (see FIG. 2) is directed in the gravity direction. The operation mode may be shifted in accordance with a plurality of kinds of device outputs. For example, the operation mode may be shifted to the mouse mode, based on a mouse sensor output and an inertial sensor output. As another example, the operation mode may be shifted to the stick mode, based on a stick output and a mouse sensor output. As another example, the operation mode may be shifted to the gyro mode, based on a mouse sensor output and an inertial sensor output.

In the above exemplary embodiment, in a case where a plurality of controllers are connected to the main body apparatus 2, operation modes may be set for the respective controllers, so that an aim sight operation or the like can be performed in accordance with an operation on each controller.

The game processing in which the aim sight is operated to launch a shot is merely an example. For example, game processing in which a target pointed by a pointer such as an aim sight is selected is also applicable. The type of the game is not limited, and may be a competitive game, a puzzle game, a simulation game, a music game, or the like, for example. The game processing in the exemplary embodiment is not limited to processing for a game played by a single user, and may be processing for a game in which a plurality of users compete or cooperate with each other. For example, a first user may perform a movement operation for a character object, and a second user may operate an aim sight. In addition, a movement operation for a character object by the first user may be allowed to be performed by only a stick of a controller used by the first user, for example.

A target to which the above processing is applied is not limited to game processing. For example, the above processing may be applied to a drawing application, a video/image edit application, or an operation system. For example, the above processing may be applied to a menu operation on an operation system. In a case of application to game processing, the above processing may be applied to a menu operation in a game.

In the above exemplary embodiment, the example in which one controller has one stick has been shown (see FIG. 2, etc.). However, one controller may have two or more sticks. In this case, for example, while an operation of an aim sight and shifting to the stick mode are performed in accordance with an operation of one of the sticks (see the exemplary embodiment), an operation of the aim sight and shifting to the stick mode may not necessarily be performed in accordance with an operation of the other stick. In this case, the other stick may be used for movement of a player object or movement of the aim sight.

The right controller and the left controller may allow a user to operate the controllers by holding each controller by one hand. In this case, for example, every controller may allow an operation to be performed in three modes, only one controller may allow an operation to be performed in three modes, or modes of operations may be assigned between the two controllers. For example, a mouse operation may be performed by the right controller, and a gyro operation and a stick operation may be performed by the left controller. As another example, a mouse operation and a gyro operation may be performed by the right controller, and a mouse operation and a stick operation may be performed by the left controller. That is, assignment of modes includes a case where a certain mode is assigned to both controllers. In a case where modes are assigned as described above, even if a device input corresponding to a specified mode is performed on the controller that does not allow an operation of the aim sight in the specified mode, shifting to the specified mode may not necessarily be performed. For example, in a case where, for an operation of an aim sight, the right controller allows a mouse operation and a gyro operation but does not allow a stick operation, the right controller may not necessarily be shifted to the stick mode when a stick operation is performed on the right controller. A device that is not used for an operation of an aim sight may be used for other game processing. For example, in the above case, the stick of the right controller may be used for movement of a virtual camera or a player object.

In the above exemplary embodiment, the example in which, in the gyro mode, the orientation and the movement of the controller are detected based on an output of the gyro sensor to perform processing (see S401, S404 in FIG. 13, etc.) has been shown. However, in the gyro mode, the orientation and the movement of the controller may be detected based on an output of the acceleration sensor, the optical sensor, or the like, for example, to perform the same processing. In this case, other mode name and process name may be adopted instead of the gyro mode and the gyro mode process. In the above exemplary embodiment, the example in which processing (see S202 in FIG. 11, S301, S304, and S305 in FIG. 12, S402 in FIG. 13, etc.) is executed based on a stick output has been shown. However, the same processing may be executed based on a button output, for example. In this case, other mode name and process name may be adopted instead of the stick mode and the stick mode process.

In the above exemplary embodiment, the example in which determination and setting for modes are performed through execution of the game program on the main body apparatus has been shown. However, determination and setting for modes may be performed through execution of another program (e.g., operation program) on the main body apparatus, and based on the determination and the setting, the game processing may be executed through execution of the game program on the main body apparatus. Processes for determination and setting for modes and various processes composing the game processing may be assigned between the operation program and the game program. The controller may perform determination and setting for modes.

In the above exemplary embodiment, the example in which mode shift can be performed between the mouse mode, the gyro mode, and the stick mode has been shown (see

FIG. 8). However, shifting allowed between modes is not limited thereto. For example, mode shift may not necessarily be allowed between the gyro mode and the stick mode. For example, mode shift from the gyro mode and the stick mode to the mouse mode may not necessarily be allowed. Thus, mode shift from a certain mode to one or more other modes may not necessarily be allowed.

The various data shown in the above exemplary embodiment are merely an example, and other data converted from the above various data, or the like may be used as appropriate in each process.

The game system is merely an example of the information processing system, and the information processing system may be a system in which a game is not executed. The main body apparatus may be a general-purpose personal computer. Also, the controller is merely an example, and for example, the shape thereof is not limited. The controller may not necessarily be attachable to and detachable from the main body apparatus. Only one of the two controllers may be provided with a mouse sensor. Only one of the two controllers may be provided with a stick. The controllers may not necessarily be one set of two controllers.

The information processing system may include a terminal-side apparatus and a server-side apparatus which can communicate with each other via a network, and at least a part of the series of processes described above may be executed by the server-side apparatus. The server may be composed of a plurality of information processing apparatuses, and the processing may be executed in a shared manner by the plurality of information processing apparatuses.

While the exemplary embodiments and modifications have been described above, it is to be understood that the above description is, in all aspects, merely an illustrative example, and is not intended to limit the scope thereof. In addition, it is to be understood that various improvements and changes can be made on the exemplary embodiments and modifications.

## Claims

1. A computer-implemented method comprising:
setting one of a plurality of modes including a first mode, a second mode, and a third mode;
in the first mode, controlling a virtual object, based on an output of a mouse sensor (24, 44) included in at least one controller of one or a plurality of controllers (3, 4);
in the second mode, controlling the virtual object, based on an output of an inertial sensor (83, 84, 96, 97) included in at least one controller of the one or plurality of controllers;
in the third mode, controlling the virtual object, based on an output of a user-operable directional operation portion (22, 42) included in at least one controller of the one or plurality of controllers; and
when the mode is the first mode, shifting the mode to the second mode, based on at least a first condition being satisfied, and shifting the mode to the third mode, based on at least a second condition being satisfied.

2. The computer-implemented method according to claim 1, further comprising, when the mode is the second mode, shifting the mode to the third mode, based on the second condition being satisfied, and shifting the mode to the first mode, based on at least a third condition being satisfied.

3. The computer-implemented method according to claim 1 or 2, further comprising, when the mode is the third mode, shifting the mode to the second mode, based on at least the first condition being satisfied, and shifting the mode to the first mode, based on at least a fourth condition being satisfied.

4. The computer-implemented method according to claim 3, wherein
the third condition and the fourth condition each include a condition regarding an output of the mouse sensor, and
a period required for the computer-implemented method to make determination for the third condition is longer than a period required for the computer-implemented method to make determination for the fourth condition.

5. The computer-implemented method according to any one of claims 1 to 4, wherein
the first condition includes a condition regarding an output of the inertial sensor, the computer-implemented method further comprising, when the mode is the first mode,
if an output of the mouse sensor does not indicate movement of the at least one controller including the mouse sensor, shifting the mode to the second mode when at least the first condition is satisfied, and
if an output of the mouse sensor indicates movement of the controller, not shifting the mode to the second mode even when the first condition is satisfied.

6. The computer-implemented method according to any one of claims 1 to 5, further comprising setting the second mode, when an output of the mouse sensor does not indicate movement of the at least one controller including the mouse sensor, an output of the inertial sensor does not indicate movement of the controller, and the directional operation portion is not being operated.

7. The computer-implemented method according to any one of claims 1 to 6, further comprising, based on an output of the controller that includes the directional operation portion and one of the mouse sensor or the inertial sensor and does not include the other one, shifting the mode between the third mode and one of the first mode or the second mode and not shifting the mode between the third mode and the other one of the first mode or the second mode.

8. The computer-implemented method according to any one of claims 1 to 7, further comprising causing the computer to execute game processing, wherein
the virtual object is a pointer to be used in the game processing.

9. An information processing system comprising means configured to implement the computer-implemented method according to any one of claims 1 to 8.

10. An information processing program configured to, when executed by a computer, cause the computer to execute the computer-implemented method according to any one of claims 1 to 8.
